## Europäisches Patentamt

## European Patent Office

## Office européen des brevets

(19)

(11) Numéro de publication: **0 291 380**
**A1**

(12)

# DEMANDE DE BREVET EUROPEEN

(21) Numéro de dépôt: **88401054.7**

(22) Date de dépôt: **29.04.88**

(51) Int. Cl.⁴: **B 23 Q 3/157**

(30) Priorité: **15.05.87 FR 8706826**

(43) Date de publication de la demande:
**17.11.88 Bulletin 88/46**

(84) Etats contractants désignés: **DE ES GB IT SE**

(71) Demandeur: **RENAULT AUTOMATION**
**8/10 avenue Emile Zola**
**F-92109 Boulogne-Billancourt (FR)**

(72) Inventeur: **Poncel, Michel**
**Rue de la Champagne**
**F-28410 Boutigny (FR)**

**Segura, Didier**
**10, rue Roger Salengro**
**F-94240 L'Hay Les Roses (FR)**

**Boone, Raymond**
**22, rue Léon Martine Rés."La Briaude"-Bât D1**
**F-92290 Chatenay Malabry (FR)**

**Leguy, Bernard**
**14, rue Marcel Pagnol Le Haut Buc**
**F-78530 Buc (FR)**

**Leroy, Bernard**
**9, allée des Ormeaux**
**F-92160 Antony (FR)**

(74) Mandataire: **Saint Martin, René**
**Régie Nationale des Usines Renault Direction des**
**Recherches et Développements Service 0267 8-10,**
**Avenue Emile-Zola**
**F-92109 Boulogne Billancourt (FR)**

(54) **Unité trois axes à commande numérique notamment pour machine transfert et atelier flexible.**

(57) Unité trois axes (X, Y, Z) à commande numérique, notamment pour machine transfert et atelier flexible, du type comprenant un banc fixe (0) pourvu de guidages rectilignes (1, X) et d'une face d'accouplement (2) qui comporte :
- une table horizontale (3) pourvue de guidages rectilignes (4, Z),
- une console verticale (5) pourvue de guidages rectilignes (5, Y),
- une table verticale (7) portant la broche (8),
- ainsi qu'un magasin (9) et un changeur d'outils (10) embarqués avec la broche (8) sur cette table (7) de manière à effectuer ce changement d'outils par un seul actionneur.

FIG.1

## Description

## UNITE TROIS AXES A COMMANDE NUMERIQUE, NOTAMMENT POUR MACHINE TRANSFERT ET ATELIER FLEXIBLE

La présente invention se rapporte à une unité trois axes à commande numérique pour la réalisation d'opérations variables, en nombre limité, sur des pièces usinées en transfert ou en atelier flexible notamment.

Cette unité permet :
- un échange d'outils monoaxe, de petites têtes multibroches ou de moyens de contrôle des bruts ou des usinages réalisés,
- une modification de position de trous de perçage en diamètre et entraxe.

Cette unité peut s'inscrire dans n pas d'une machine transfert, ou d'un îlot de fabrication. Rendue universelle, elle peut être autonome.

Parmi les nombreuses applications possibles figurent les opérations suivantes :
- fraisage d'une face par balayage,
- fraisage par contournage,
- fraisage point de départ en escalier,
- fraisage ébauche d'alésage,
- alésages de précision à entraxe précis,
- détourages, filetages intérieurs ou extérieurs,
- trous variables en position et en dimensions suivant les options.

Suivant une particularité essentielle de l'invention, cette unité trois axes à commande numérique, comprenant un bâti pourvu de guidages rectilignes X et d'une face d'accouplement (ou monobloc avec le support de montage), comporte :
- une table horizontale pourvue de guidages rectilignes Z,
- une console verticale pourvue de guidages rectilignes Y,
- une table verticale portant la broche,
- un magasin d'outils embarqué sur la table verticale.

Suivant une autre particularité de l'invention, le changement d'outils peut s'effectuer dans n'importe quelle position en X, Y, Z de la broche. En effet, le changeur d'outils est embarqué avec la broche et les organes de préhension d'outils en position ouverte permettent, sans avoir à s'escamoter, à l'outil d'usiner et au magasin d'évoluer. Ceci amène un gain de temps important.

Suivant une autre particularité de l'invention, la fonction "changement d'outils" (excepté la préhension), assurée par un seul actionneur, est entièrement mécanique et comprend les opérations successives suivantes :
- débridage de l'outil à changer,
- avance du changeur : sortie des outils, respectivement de la broche et du magasin,
- rotation des pinces,
- retour du changeur : entrée des outils, respectivement dans la broche et le magasin,
- bridage du nouvel outil.

L'organe de préhension des outils se ferme hydrauliquement en début de séquence, permettant ainsi le déverrouillage de l'outil dans le magasin et s'ouvre par un ressort de rappel, verrouillant l'outil dans le magasin.

D'autres particularités de l'invention ressortiront plus clairement avec les avantages en découlant, à la lecture de la description qui suit d'un mode de réalisation préférentiel, donné à titre d'exemple non limitatif en référence aux dessins annexés dans lesquels :

- la figure 1 représente une vue en perspective d'une unité trois axes conforme à l'invention ;
- et la figure 2 représente un changeur d'outils intégré à cette unité trois axes.

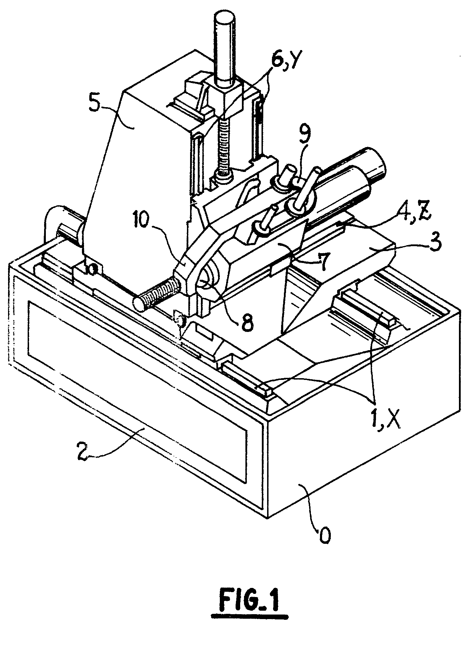

Sur la figure 1, l'architecture du module de base constituant cette unité trois axes X, Y, Z présente un banc fixe 0, pourvu de guidages rectilignes 1, X à éléments roulants et d'une face d'accouplement verticale 2. Sur le banc se déplace une table horizontale 3 pourvue de guidages rectilignes 4, Z à éléments roulants. Cette table 3 est surmontée d'une console verticale 5 pourvue de guidages rectilignes 6, Y a éléments roulants. Sur cette console 5 se déplace une table verticale 7 portant la broche 8, le magasin et le changeur d'outils 9 et 10.

Le module de base décrit ci-dessus est complété par les équipements conventionnels suivants :
- des vis à éléments roulants avec écrous précontraints sur palier à butées préchargées, pour les trois axes X, Y, Z,
- des servomoteurs sans balai montés :
. en direct pour les axes Y et Z,
. par l'intermédiaire de poulies et courroies crantées pour l'axe X, la broche et le changeur d'outils,
. par l'intermédiaire d'un couple de roue et vis sans fin pour le magasin,
- des codeurs pour les déplacements, ou en option des règles incrémentales,
- une commande numérique à calculateur CNC pour le pilotage des cinq axes : X, Y, Z, le magasin et le changement d'outils.

L'outillage équipant cette unité trois axes consiste en des outils simples, des outils multiples et des outils spéciaux montés sur des cônes ISO.

Les outils spéciaux comprennent :
- des têtes à renvoi d'angle pour des usinages à angles quelconques, avec une interpolation linéaire sur deux ou trois axes,
- une ou des broches montées sur cone et entraînées par multiplicateur ou réducteur par la broche de la machine,
- des systèmes de palpage pour le positionnement par rapport au brut de la pièce ou pour contrôle des cotes réalisées.

L'arrosage des outils est assuré par une buse montée sur la broche, ou par une buse extérieure (montée sur la table verticale).

Le magasin d'outils est constitué d'une chaîne sur laquelle viennent se fixer les godets recevant les outils. L'axe avant de la chaîne est monté fixe. L'axe arrière, moteur par l'intermédiaire d'une roue et vis sans fin, est à translation pour tendre la chaîne. Le verrouillage de l'outil dans son godet est assuré par deux verrous à ressort entrant dans les encoches de la collerette du cône à l'arrivée de celui ci. Le déverrouillage s'effectue grâce à la pince de préhension de l'outil, au moment de la prise de celui-ci.

La pince fonctionne hydrauliquement pour sa fermeture et par un ressort de rappel pour son ouverture.

On contrôle son état par deux détecteurs.

Elle est constituée d'une partie fixe sur laquelle viennent se loger les axes de deux mors de préhension et dans laquelle coulissent deux parties flottantes coaxiales. La pièce flottante extérieure commande par sa translation la fermeture des mors pendant que la pièce intérieure, par un mouvement inverse, vient fournir un troisième point d'appui sur la collerette de l'outil.

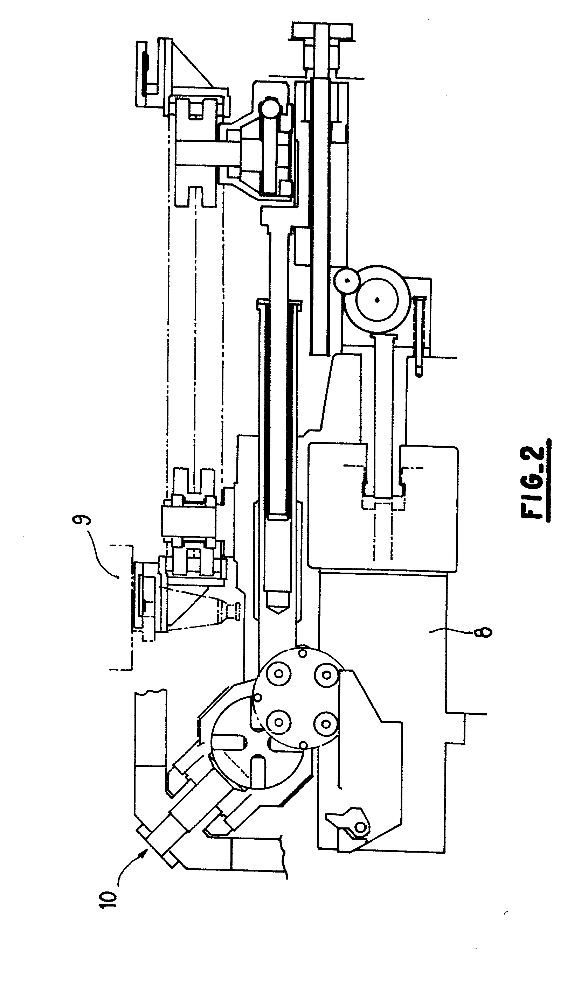

La fonction "changement d'outils" (excepté la préhension), assurée mécaniquement, permet d'enchaîner toutes les opérations nécessaires grace à un seul servomoteur (voir figure 2).

Pour cela, on utilise :
- pour la translation, une vis à billes,
- pour le débridage de l'outil dans 1a broche, une came, solidaire de l'écrou de la vis, actionne le levier d'un système monté sur ressort. Ce système comporte un galet excentrique sur un levier et un arbre central coulissant. Lorsque le levier est sollicité par la came, l'excentrique fait coulisser l'arbre central vers l'avant. Celui-ci, en atteignant le débridage, ne peut l'actionner qu'en forçant le système à reculer et à prendre appui sur l'extérieur de la partie tournante de la broche. Ainsi, les roulement de la broche ne sont pas sollicités par l'effort de débridage,
- pour la rotation des pinces, un système de croix de Malte, lié à un couple conique et à une roue, est monté sur le changeur d'outils. Deux jeux de 4 galets à 90° sont fixés de part et d'autre de la roue. Le premier jeu engrène avec la croix de Malte. Deux des galets du second jeu, roulant sur une rampe fixée sur la table verticale, verrouillent la rotation pendant l'avance du changeur, jusqu'à rencontrer une butée escamotable. La roue tourne alors d'un quart de tour, fait tourner la croix de malte (loi d'accélération) qui, par l'intermédiaire du couple conique, entraîne la rotation des pinces de 180°. Au retour, la butée s'escamote, empêchant ainsi toute rotation.

L'enchaînement des opérations se fait comme suit :
- fermeture des pinces,
- débridage de l'outil,
- avance de l'ensemble changeur pour sortir les outils respectivement de la broche et du magasin,
- rotation des pinces de 180° afin d'intervertir les outils, en fin d'avance du changeur,
- retour du changeur : mise en place des outils dans la broche 6 et le magasin,
- bridage de l'outil dans la broche (bridage automatique dans le magasin),
- ouverture des pinces (verrouillage de l'outil dans le magasin).

## Revendications

1 - Unité trois axes (X, Y, Z) à commande numérique, notamment pour machine transfert et atelier flexible, du type comprenant un banc fixe (0) pourvu de guidages rectilignes (1, X) et d'une face d'accouplement (2) caractérisée en ce qu'elle comporte :
- une table horizontale (3) pourvue de guidages rectilignes (4, Z),
- une console verticale (5) pourvue de guidages rectilignes (5, Y),
- une table verticale (7) portant la broche (8),
- ainsi qu'un magasin (9) et un changeur d'outils (10) embarqués avec la broche (8) sur cette table (7) de manière à effectuer ce changement d'outils par un seul actionneur.

2 - Unité trois axes suivant la revendication 1, caractérisée en ce que les guidages rectilignes (5, Y), qui permettent à la table verticale (7) d'évoluer, sont situés dans un plan vertical parallèle à l'axe de la broche.

3 - Unité trois axes suivant la revendication 1 ou 2 caractérisée en ce que le magasin d'outils et le changeur d'outils sont embarqués avec la broche, le changement d'outils pouvant donc s'effectuer dans n'importe quelle position en X, Y, Z de la broche.

4 - Unité trois axes suivant l'une quelconque des revendications 1 à 3 caractérisée en ce que le magasin d'outils est incliné de façon à rester près de la broche (changement d'outils rapide) sans que celle-ci s'éloigne des guidages rectilignes de la table verticale, ceci afin d'éviter le porte- à-faux.

5 - Unité trois axes suivant l'une quelconque des revendications 1 à 4 caractérisée en ce que les organes de préhension d'outils (ou pinces) en position ouverte permettent, sans avoir à s'escamoter, à l'outil d'usiner et au magasin d'évoluer, ceci amenant un gain de temps important.

6 - Unité trois axes suivant l'une quelconque des revendications 1 à 5 caractérisée en ce que la pince est constituée d'une partie fixe sur laquelle viennent se loger les axes de deux mors de préhension et dans laquelle se déplacent deux parties coulissantes coaxiales.

7 - Unité trois axes suivant l'une quelconque des revendications 1 à 6 caractérisée en ce que la pièce coulissante extérieure de la pince commande, par sa translation, la fermeture des mors, pendant que la pièce intérieure, par un mouvement inverse, vient fournir un troisième point d'appui sur la collerette de l'outil.

8 - Unité trois axes suivant l'une quelconque des revendications 1 à 7 caractérisée en ce que la fermeture des pinces est hydraulique, l'ouverture se faisant par ressort de rappel.

9 - Unité trois axes suivant l'une quelconque des revendications 1 à 8 caractérisée en ce que la fermeture des pinces provoque le déverrouillage de l'outil dans le magasin, leur ouverture provoquant le verrouillage de l'outil dans le magasin.

10 - Unité trois axes suivant l'une quelconque des revendications 1 à 9 caractérisée en ce que la fonction "changement d'outils" (excepté la préhension), assurée par un seul actionneur, est entièrement mécanique, ce qui élimine les séquences.

11 - Unité trois axes suivant l'une quelconque des revendications 1 à 10 caractérisée en ce que le débridage de l'outil dans la broche s'effectue en début de mouvement de l'actionneur du changement d'outils grâce à un système prenant appui sur l'intérieur de la broche, les roulements de celle-ci n'étant ainsi pas sollicités.

12 - Unité trois axes suivant l'une quelconque des revendications 1 à 11 caractérisée en ce que l'avance de tout le changeur, provoquée par l'actionneur du changement d'outils, s'effectue après le débridage de l'outil dans la broche et permet la sortie des deux outils à intervertir, respectivement de la broche et du magasin, puis la rotation des pinces.

13 - Unité trois axes suivant l'une quelconque des revendications 1 à 12 caractérisée en ce que la rotation des pinces est provoquée par un système à croix de Malte, un couple conique et une roue à galets ; le tout, monté sur le changeur d'outils, rencontre une came escamotable.

14 - Unité trois axes suivant l'une quelconque des revendications 1 à 13 caractérisée en ce que le retour du changeur, provoqué par l'actionneur du changement d'outils, permet l'entrée des outils, respectivement dans la broche et le magasin.

15 - Unité trois axes suivant l'une quelconque des revendications 1 à 14 caractérisée en ce que le bridage de l'outil dans la broche s'effectue après le retour du changeur et en fin de mouvement de l'actionneur du changement d'outils.

16 - Unité trois axes suivant l'une quelconque des revendications 1 à 15 caractérisée en ce que le bridage de l'outil dans le magasin se fait de façon automatique à l'arrivée de celui-ci par l'intermédiaire de verrous à ressort, libérés à l'ouverture des pinces, et qui rentrent dans les encoches de la collerette de l'outil. La fermeture des pinces escamote les verrous, libérant ainsi l'outil.

0291380

**FIG.1**

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 5, no. 193 (M-101)[865], 9 décembre 1981; & JP-A-56 114 639 (HITACHI SEIKI K.K.) 09-09-1981 * Figures 1-3,5 * --- | 1-4 | B 23 Q    3/157 |
| Y | FR-A-1 389 021  (GIDDINGS & LEWIS) * Pages 2-9; figures 1-4,12-16a * | 1-4 | |
| A | --- | 5-16 | |
| A | MACHINES PRODUCTION, no. 370, 25 janvier 1984, pages 35,36,38, Sofetec, Boulogne/Seine, FR; "Cellule d'usinage flexible: avec des unités modulaires" * Pages 35,36; figures 2-ɔ * --- | 1 | |
| A | SOVIET INVENTIONS ILLUSTRATED, section General/Mechanical, semaine 8539, no. 85-241758/39, 8 novembre 1985, Derwent Publications Ltd, Londres, GB; & SU-A-1 144 844 (EMELYANOV A.V.) 15-03-1985 * Figures * --- | | |
| A | PATENT ABSTRACTS OF JAPAN, vol. 7, no. 128 (M-220)[1273], 3 juin 1983; & JP-A-58 45 836 (TSUGAMI K.K.) 17-03-1983 * Figures 1-5 * ----- | | |

DOMAINES TECHNIQUES RECHERCHES (Int. Cl.4)

B 23 Q

Le présent rapport a été établi pour toutes les revendications

| Lieu de la recherche | Date d'achèvement de la recherche | Examinateur |
|---|---|---|
| LA HAYE | 08-08-1988 | ROSENBAUM H.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................
& : membre de la même famille, document correspondant

EPO FORM 1503 03.82 (P0402)